(19) Europäisches Patentamt
European Patent Office
Office européen des brevets

(11) Numéro de publication: **0 176 395**
**B1**

(12) # FASCICULE DE BREVET EUROPÉEN

(45) Date de publication du fascicule du brevet: **21.09.88**

(21) Numéro de dépôt: **85401662.3**

(22) Date de dépôt: **20.08.85**

(51) Int. Cl.⁴: **C 08 L 69/00**, C 08 K 5/34, F 23 L 9/06 // (C08L69/00, 27:18, 83:04)

(54) **Compositions de polycarbonates aromatiques à combustibilité retardée.**

(30) Priorité: **30.08.84 FR 8413417**

(43) Date de publication de la demande: **02.04.86 Bulletin 86/14**

(45) Mention de la délivrance du brevet: **21.09.88 Bulletin 88/38**

(84) Etats contractants désignés: **BE DE GB IT NL**

(56) Documents cité: **EP-A-0 044 423**

**CHEMICAL ABSTRACTS, vol. 85, no. 14, 4 octobre 1976, page 45, résumé no. 95277n, Columbus, Ohio, US**

(73) Titulaire: **ATOCHEM, 4 & 8, Cours Michelet La Défense 10, F-92800 Puteaux (FR)**

(72) Inventeur: **Perthuis, Joel, Résidence Saint- Michel Appt No. 11, F-27300 Bernay (FR)**
Inventeur: **Poisson, Pierre, Le Mascrier, F-27300 Bernay (FR)**

**EP 0 176 395 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

Les polycarbonates sont déjà par eux-mêmes des matériaux autoextinguibles. Toutefois, ils sont considérés comme étant encore trop inflammables pour un certain nombre d'applications concernant notamment les industries du bâtiment, de l'électro-ménager ou de l'aéronautique.

Aussi, afin de les rendre encore plus ignifuges, de nombreuses solutions ont été proposées.

C'est ainsi que l'on a déjà fait usage de produits halogénés tels le décabromodiphényléther, introduit sous forme d'additif ou le tétrachloro ou le tétrabromobisphénol A sous forme d'agents de polycondensation; mais l'on obtient ainsi des matériaux susceptibles de dégager lors de leur mise en oeuvre ou dans des incendies, de l'acide chlorhydrique ou de l'acide bromhydrique qui sont particulièrement corrosifs et toxiques.

On a alors proposé certains dérivés du phosphore qui ne présentent pas ces inconvénients tels les esters d'acides phényl ou xylène phosphoniques halogénés sur le noyau; toutefois, il faut les incorporer à des doses telles que les propriétés mécaniques du polycarbonate ainsi chargé et son aptitude à la transformation en sont sérieusement affectés - de même, le coût en devient prohibitif.

D'autres additifs ont encore été proposés tels les sels alcalins d'acide alkyl ou arylsulfoniques, mais les compositions obtenues sont généralement translucides ou opaques.

La demande de brevet européen 0044423 décrit des sels d'ammonium de l'urazole et leur emploi pour l'ignifugation des polymères et plus précisément des polyamides (voir page 10 et exemple 6).

Nous avons trouvé, et ceci fait l'objet de la présente invention, que l'on pouvait obtenir des compositions de résines synthétiques transparentes à base de polycarbonates et, en particulier, de polycarbonate dérivé du bisphénol A, présentant un comportement au feu amélioré en leur incorporant une quantité très faible d'un sel alcalin de l'urazole (ou triazolidine-1, 2, 4 dione-3, 5), substitué ou non.

Ce sel répond d'une manière générale à la formule suivante:

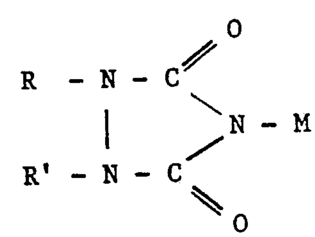

dans laquelle R et R' peuvent être identiques ou différents et représentent un reste alcoyle en $C_1$ à $C_6$, un radicale phényle substitué ou non par des halogènes tels que chlore ou brome,

et M désigne un atome de métal alcalin choisi parmi Li, Na, K et de préférence Na et K.

Conviennent tout particulièrement comme additifs ignifugeants les sels alcalins de l'urazole non substitué ou urazolates, définis par la formule suivante:

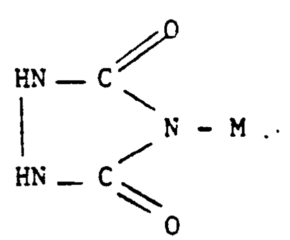

avec M = Na et K

Tous ces sels de l'urazole, substitués ou non, doivent être incorporés au polycarbonate à une concentration pondérale comprise entre 0,1 et 1 pour mille, de préférence entre 0,3 et 0,5 pour mille.

Ces sels sont obtenus par addition de la base voulue, soude ou potasse, à une solution alcoolique d'urazole suivant la réaction:

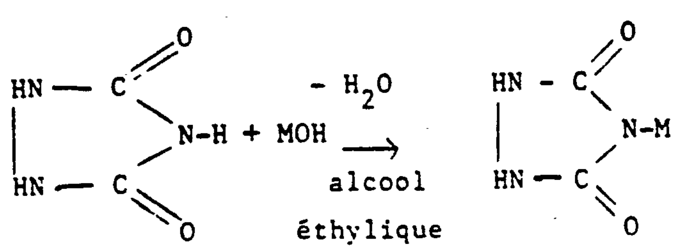


Le sel qui a précipité est séparé puis lavé.

L'urazole peut être obtenu aisément à partir de l'hydrazodicarbonamide selon la réaction:

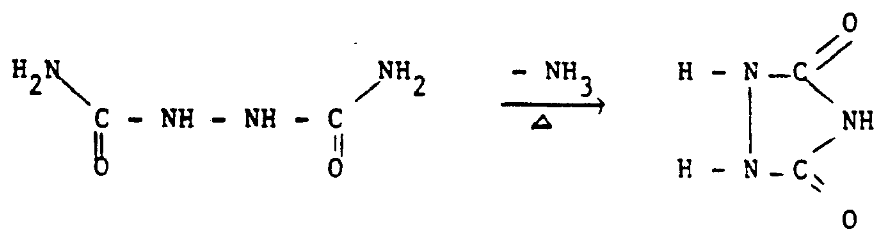


(S.Thiele, O. Strange - Justus Liebigs. Ann Chem. 283 1 1895/ Brevet EP 30627 Bayer).

Les polycarbonates qui peuvent être ignifugés suivant l'invention par l'addition de sels alcalins de l'urazole substitué ou non peuvent être choisis parmi les divers polycarbonates ou copolycarbonates aromatiques dérivant d'un ou plusieurs diphénols tels que résorcinol, hydroquinone, dihydroxydiphényle, bis (hydroxyphényl, alcanes, bis (hydroxyphényl) cycloalcanes, bis (hydroxyphényyl) éthers, bis (hydroxyphényl, sulfures, bis (hydroxyphényl) cétones, bis (hydroxyphényl) sulfones, bis (hydroxyphényl) sulfoxydes, α, α' - bis (hydroxyphényl) di isopropylbenzènes, et les dérivés alcoylés sur le noyau de tels diphénols.

En particulier, les polycarbonates ou copolycarbonates peuvent être choisis parmi ceux dérivant d'un ou plusieurs bisphénols tels que bis (hydroxy-4 phényl)-2,2 propane, dihydroxy-4,4' diphényl, bis (hydroxy-4 phényl)-2,4 méthyl-2 butane, bis (hydroxy-4 phényl)-1,1 cyclohexane, α - α' bis (hydroxy-4 phényl) p-di isopropylbenzène, bis (méthyl-3 hydroxy-4 phényl) -2,2 propane, bis (diméthyl-3,5 hydroxy-4 phényl) méthane, bis (diméthyl-3,5 hydroxy-4 phényl)-2,2 propane, bis (diméthyl-3,5 hydroxy-4 phényl) sulfone, bis (diméthyl-3,5, hydroxy-4 phenyl)-2,4 méhtyl-2 butane, bis (diméthyl-3,5 hydroxy-4 phényl)-1,1 cyclohexane, et α, α' - bis (diméthyl-3,5 hydroxy-4-phényl) p-di isopropylbenzène.

Les polycarbonates et copolycarbonates préférés sont ceux qui dérivent d'un ou plusieurs bisphénols choisis dans le groupe formé par le bis (hydroxy-4 phényl)-2,2 propane, encore appelé bisphénol A, le bis (diméthyl-3,5 hydroxy-4 phényl)-2,2 propane, et le bis (hydroxy-4 phényl)-1,1 cyclohexane.

Ces polycarbonates aromatiques, qui peuvent être préparés par les procédés bien connus de transestérification en milieu fondu entre le ou les diphénols choisis et le carbonate de diphényle ou de réaction interfaciale entre le ou les diphénols désirés et le phosgène, sont généralement thermoplastiques et possèdent des masses moléculaires viscosimétriques qui, calculées à partir de leur viscosité en solution, sont comprises entre 15 000 et 60 000 et se situent de préférence entre 20 000 et 40 000.

En plus de l'additif ignifugeant, les compositions de polycarbonate peuvent renfermer également d'autres additifs tels que des pigments, des colorants, des stabilisants vis-à-vis des rayons ultraviolets, des agents de démoulage, des stabilisants à la dégradation thermique et des charges. Lesdites compositions peuvent renformer également des fibres de verre, notamment en proportions allant de 10 à 35 % en poids du polycarbonate, dans le but d'améliorer la rigidité de la résine thermoplastique de polycarbonate. On peut leur adjoindre également des agents qui diminuent le gouttage tels que des polysiloxanes ou des polytétrafluoroéthylènes, et en particulier des polytétrafluoroéthylènes se présentant sous la forme d'une poudre blanche obtenue par polymérisation de tétrafluoroéthylène en émulsion aqueuse et possédant des masses moléculaires en poids comprises entre $10^5$ et $10^6$. Nous avons utilisé dans nos essais de la poudre d'HOSTAFLON TF 9205 fabriquée par la Société HOECHST. La quantité de polytétrafluoroéthylène utilisée peut représenter 0,1 % à 1 % du poids du polycarbonate.

L'incorporation du sel ignifugeant de l'invention se fait par malaxage dans le polycarbonate à l'état fondu - tout appareil de malaxage assurant une bonne dispersion (tel qu'extrudeuse monovis ou double vis, malaxeur Buss...) peut donc convenir.

La méthode la plus pratique consiste à mélanger à sec, par exemple, au tonneau, les granulés de polycarbonate et le sel ignifugeant et à alimenter avec le mélange ainsi obtenu la trémie d'une extrudeuse - les joncs qui sortent fondus de l'extrudeuse, munie d'une filière multitrous, sont refroidis par passage dans un bac à eau et coupés en granulés.

Les éprouvettes destinées à être utilisées pour les essais normalisés de combustion seront obtenues par moulage par injection des granulés obtenus ci-dessus, après séchage convenable, les températures d'injection étant de l'ordre de 280 à 320°C.

Parmi les divers essais existant pour évaluer le comportement au feu des polymères, deux essais de combustion, considérés comme particulièrement significatifs, ont été retenus pour apprécier le comportement des compositions de polycarbonate suivant l'invention, à savoir d'une part l'essai de détermination de l'Indice d'Oxygène Limite (I.O.L.) défini dans la norme ASTM D 2863, et, d'autre part, l'essai de combustion UL 94 décrit dans le bulletin 94 des UNDERWRITERS' LABORATORIES.

Dans le cas de compositions non additionnées de charges risquant de les opacifier, la transparence peut être vérifiée au moyen d'un HAZEMETER de GARDNER, type XL 211 selon la norme ASTM D 1003-61.

Les exemples qui sont résumés dans le tableau ci-après ont été effectués sur un polycarbonate du commerce, obtenu par réaction interfaciale entre le phosgène et le bisphénol A et présentant une masse moléculaire de 25 000.

A ce polycarbonate ont été incorporés différentes doses d'urazolates par la méthode décrite ci-dessus ; les granulés obtenus ont servi à mouler des éprouvettes parallélépipédiques rectangles de 3,2 mm d'épaisseur sur

lesquelles on a effectué les essais d'inflammabilité normalisés.

| Exemple | Composition parties pour mille | | | Indice d'oxygène en % | Temps moyen de combustion en sec | Gouttes enflammant le coton | Classement UL 94 3,2 mm | Transparence de l'éprouvette |
|---|---|---|---|---|---|---|---|---|
| | Polycarbonate | Urazolate | Hostaflon TF 9205 | | | | | |
| Témoin | 1.000 | 0 | 0 | 25 | 14 | nombreuses | $V_2$ | oui |
| 1 | 1.000 | Urazolate 0,3 de sodium | 0 | 32 | 7,7 | 1 à 2 gouttes par éprouvette | $V_2$ | oui |
| 2 | 1.000 | Urazolate 0,3 de potassium | 0 | 31,7 | 4,2 | " | $V_2$ | oui |
| 3 | 1.000 | Urazolate 0,5 de sodium | 0 | 29,8 | 4,6 | 1 goutte par éprouvette | $V_2$ | oui |
| 4 | 1.000 | Urazolate 0,5 de potassium | 0 | 32,1 | 3,2 | 1 goutte par éprouvette | $V_2$ | oui |
| 5 | 1.000 | Urazolate 0,5 de potassium | 5 | 29 | 1,9 | 0 | $V_0$ | non |

**Revendications**

1. Compositions de résines synthétiques à base de polycarbonates, présentant une faible combustibilité, caractérisées en ce qu'elles comprennent, éventuellement associé à d'autres additifs et/ou charges, un additif ignifugeant répondant à la formule générale:

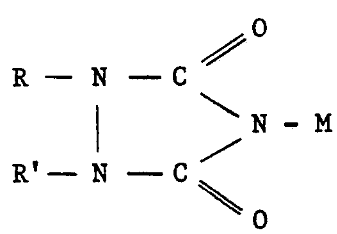

dans laquelle R et R' peuvent être identiques ou différents et représentent l'hydrogène, un reste alcoyle en $C_1$ à $C_6$ ou un radical phényle substitué ou non par des halogènes tels que chlore ou brome
et M désigne un atome de métal alcalin choisi parmi Li, Na, K et de préférence Na et K,
ledit additif ignifugeant étant utilisé en concentration pondérale comprise entre 0,1 et 1 pour mille, de préférence entre 0,3 et 0,5 pour mille.

2. Compositions selon la revendication 1, caractérisées en ce que l'additif ignifugeant répond à la formule:

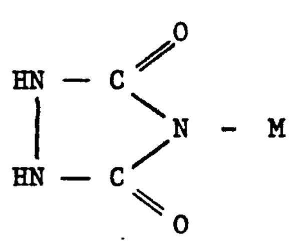

dans laquelle M désigne soit Na, soit K.

3. Compositions selon la revendication 1 ou 2, caractérisées en ce que le polycarbonate est un polycarbonate

ou copolycarbonate dérivant d'un ou plusieurs bisphénols choisis parmi le bis (hydroxy-4 phényl-) 2,2 propane, le bis (diméthy-3,5 hydroxy-4 phényl)-2,2 propane, et le bis (hydroxy-4 phényl-) 1,1 cyclohexane.

4. Compositions selon l'une des revendications 1 à 3, caractérisées en ce qu'elles renferment un agent diminuant le gouttage et notamment un polysiloxane ou polytétrafluoréthylène.

5. Compositions selon la revendication 4, caractérisée en ce que l'agent diminuant le gouttage est un polytétraflouroéthylène utilisé en quantité allant de 0,1 à 1 pour cent en poids du polycarbonate.

## Patentansprüche

1. Mischungen geringer Brennbarkeit von Kunstharzen auf Polycarbonatbasis, dadurch gekennzeichnet, daß sie, gegebenenfalls neben anderen Zusätzen und/oder Füllstoffen, einen flammenhemmenden Zusatzstoff der allgemeinen Formel

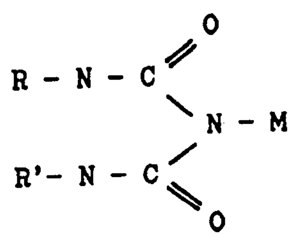

enthalten, in der R und R' gleich oder ungleich sein können und ein Wasserstoffatom, einen Alkylrest mit $C_1$ bis $C_6$ oder eine beispielsweise mit Chlor oder Brom halogenierte oder eine nichthalogenierte Phenylgruppe und M ein Alkalimetall aus der Gruppe Li, Na, K, vorzugsweise Na oder K, darstellen, wobei der genannte flammenhemmende Zusatzstoff in einer Gewichtskonzentration zwischen 0,1 und 1 ‰ vorzugsweise zwischen 0,3 und 0,5 ‰ verwendet wird.

2. Mischungen nach Patentanspruch 1, dadurch gekennzeichnet, daß der flammenhemmende Zusatzstoff die Formel

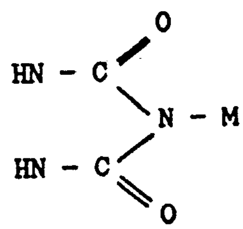

hat, in der M entweder Na oder K bedeutet.

3. Mischungen nach Patentanspruch 1 oder 2, dadurch gekennzeichnet, daß das Polycarbonat ein von einem oder mehreren der Bisphenole 2,2-Bis(4-hydroxy-phenyl)-propan, 2,2-Bis (3,5-dimethyl-4-hydroxy-phenyl)-propan und 1,1-Bis (4-hydroxy-phenyl)-cyclohexan abgeleitetes Polycarbonat oder Copolycarbonat ist.

4. Mischungen nach einem der Patentansprüche 1 bis 3, dadurch gekennzeichnet, daß sie einen das Tropfen einschränkenden Wirkstoff enthalten, und zwar insbesondere ein Polysiloxan oder Polytetrafluoräthylen.

5. Mischungen nach Patentanspruch 4, dadurch gekennzeichnet, daß der das Tropfen einschränkende Wirkstoff ein Polytetrafluoräthylen ist, das in einer Menge von 0,1 bis 1 Gewichtsprozent des Polycarbonats angewandt wird.

## Claims

1. Synthetic resin compositions based on polycarbonates and exhibiting low combustibility, characterized in that they comprise, optionally in association with other additives and/or fillers, a flameproofing additive corresponding to the general formula:

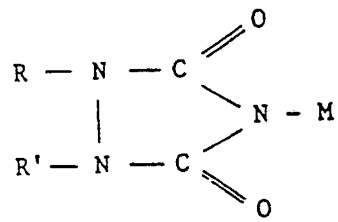

in which R and R′ can be identical or different and represent hydrogen, a $C_1$ to $C_6$ alkyl radical or a phenyl radical which is unsubstituted or substituted by halogens such as chlorine or bromine, and M denotes an alkali metal atom chosen from among Li, Na and K, preferably Na and K, the said flameproofing additive being used in a concentration by weight of between 0.1 and 1 part per thousand, preferably between 0.3 and 0.5 per thousand.

2. Compositions according to claim 1, characterized in that the flameproofing additive corresponds to the formula:

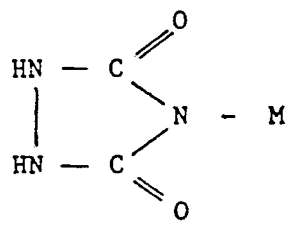

in which M denotes either Na or K.

3. Compositions according to claim 1 or 2, characterized in that the polycarbonate is a polycarbonate or copolycarbonate derived from one or more bisphenols chosen from among 2,2-bis-(4-hydroxyphenyl)-propane, 2,2-bis-(3,5-dimethyl-4-hydroxyphenyl)-propane and 1,1-bis-(4-hydroxyphenyl)-cyclohexane.

4. Compositions according to one of claims 1 to 3, characterized in that they contain an agent which reduces dripping, and especially a polysiloxane or polytetrafluoroethylene.

5. Composition according to claim 4, characterized in that the agent which reduces dripping is a polytetrafluoroethylene used in an amount ranging from 0.1 to 1 per cent by weight of the polycarbonate.